# EUROPÄISCHE PATENTSCHRIFT

(11) **EP 1 384 623 B1**
(45) Veröffentlichungstag und Bekanntmachung des Hinweises auf die Patenterteilung: **03.06.2009**
(21) Anmeldenummer: 03102234.6
(22) Anmeldetag: 21.07.2003
(51) Int. Cl.: B60Q 1/04, F21V 17/00

(54) **Scheinwerfer für Fahrzeuge**
Vehicle headlamp
Phare de véhicule

(30) Priorität: 27.07.2002 DE 10234226
(43) Veröffentlichungstag der Anmeldung: 28.01.2004
(73) Patentinhaber: Hella KGaA Hueck & Co., 59552 Lippstadt (DE)
(72) Erfinder: Derckum, Jörg, 59590 Geseke (DE); Röhr, Norbert, 59555 Lippstadt (DE); Seiger, Ralf, 59556 Lippstadt (DE)

(56) Entgegenhaltungen:
- DE-A1- 19 719 832
- DE-A1- 19 722 005
- DE-A1- 19 835 048
- DE-C1- 19 808 564

## Beschreibung

Die Erfindung betrifft einen Scheinwerfer für Fahrzeuge nach dem Oberbegriff des Patentanspruchs 1.

Abschlussscheiben von Scheinwerfern für Kraftfahrzeuge werden überwiegend kraftschlüssig mit Kleber oder Dichtungsmasse in den Gestaltzonen eines Fußes der Abschlussscheibe und eines Aufnahmebettes des Gehäuses verbunden. Um die auftretenden Fertigungsungenauigkeiten ausgleichen zu können, muss das Aufnahmebett deutlich größer als der Fuß gestaltet werden. Eine Ausrichtung der Abschlussscheibe relativ zum Gehäuse wird in der Regel nach aufwendigen Optimierungsschleifen mittels Rippen am Fuß erreicht. Diese Rippen erhöhen das Risiko der Undichtigkeiten zwischen Abschlussscheibe und Gehäuse. Aus diesem Grund besteht zwischen den Rippen und dem Aufnahmebett grundsätzlich kein Formschluss. Das bedeutet, dass eine präzise Ausrichtung zwischen Abschussscheibe und Gehäuse nicht möglich ist. Zur Sicherung der Abschussscheibe auf dem Gehäuse nach dem Füge- und Klebeprozess befinden sich häufig Rastelemente am Aufnahmebett- oder Gehäuserand. Diese Nachteile sind zum Teil beseitigt bei dem aus der DE - A -198 35 048 bekannten Scheinwerfer für Fahrzeuge. Der Scheinwerfer weist ein mindestens ein Lichtmodul aufnehmendes Gehäuse und eine die vordere Öffnung des Gehäuse abdeckende lichtdurchlässige Abschlussscheibe auf. Das Gehäuse weist mehrere Befestigungspunkte einer Befestigungsvorrichtung auf, durch die der Scheinwerfer am Fahrzeug festsetzbar ist. Zwischen zwei Befestigungspunkten ist am oberen Rand des Scheinwerfers eine erste und zweite Fixierungsvorrichtung angeordnet, von denen die erste zur Fixierung der Abschlussscheibe am Gehäuse und die zweite zur Fixierung des Gehäuses an dem Fahrzeug dient. Die Abschlussscheibe weist zur Fixierung einen nach oben stehenden Ansatz auf der in eine Aufnahmerinne eingreift und die Abschussscheibe ausschließlich quer zur Steckrichtung horizontal fixiert. Zwischen der Fixierungsvorrichtung und Befestigungspunkten bestehen große Toleranzen und die Abschlussscheibe ist quer zur Steckrichtung nur in einer horizontalen Richtung fixiert. Dadurch ist nicht sicher, dass nach dem Einsetzen des Scheinwerfers in eine Fahrzeugöffnung zwischen der Abschlussscheibe und dem Rand der Fahrzeugöffnung ein gleichbleibend breiter Spalt besteht.

Aus der DE 198 08 564 C1 ist ein Scheinwerfer für Fahrzeuge mit einem Gehäuse sowie einer das Gehäuse abdeckenden Abschlussscheibe bekannt, bei dem die Abschlussscheibe in einem Klebebett des Gehäuses gehaltert ist. Zur zusätzlichen Sicherung der Abschlussscheibe ist ein umlaufender Sicherungsrahmen vorgesehen, der aus einem Kunststoffmaterial hergestellt ist. Die Befestigung des Scheinwerfergehäuses an dem Fahrzeug ist nicht näher beschrieben.

Aus der DE 197 19 832 A1 ist ein Scheinwerfer für Fahrzeuge mit einem Gehäuse und einer das Gehäuse abdeckenden Abschlussscheibe bekannt, die eine Fixierungsvorrichtung zur Fixierung der Abschlussscheibe an dem Scheinwerfergehäuse vorsieht. Hierzu weist das Gehäuse eine Vertiefung mit einem darin angeordneten Dichtungsmittel auf, in dem ein Lippenbereich der Abschlussscheibe eingesetzt und wasserdicht abgedichtet wird.

Aus der DE 197 22 005 A1 ist ein gattungsgemäßer Scheinwerfer für Fahrzeuge bekannt, der ein Gehäuse sowie eine das Gehäuse abdeckende Abschlussscheibe aufweist. Zur Fixierung der Abschlussscheibe an dem Gehäuse ist eine Fixiervorrichtung vorgesehen, die über miteinander verrastbare Steckelemente verfügt. Die miteinander verrastbaren Steckelemente sind in Umfangsrichtung der Abschlussscheibe an mehreren Fixierungspunkten vorgesehen. Zur Ausrichtung der Abschlussscheibe weist der bekannte Scheinwerfer ferner eine Zentriervorrichtung auf, wobei eine erste Zentriervorrichtung über Steckelemente verfügt, so dass die Abschlussscheibe in horizontaler Richtung bezüglich des Scheinwerfergehäuses bewegbar ist, und wobei eine zweite Zentriervorrichtung über Steckelemente verfügt, so dass die Abschlussscheibe in vertikaler Richtung bewegbar ist. Der bekannte Scheinwerfer ermöglicht zwar ein Ausrichten der Abschlussscheibe relativ zu dem Gehäuse des Scheinwerfers. Angaben zur Befestigung des Scheinwerfers an dem Fahrzeug sind nicht gemacht.

Aufgabe der Erfindung ist es daher, einen Scheinwerfer für Fahrzeuge derart weiterzubilden, dass das Ausrichten einer Abschlussscheibe beim Aufsetzen auf ein Gehäuse des Scheinwerfers verbessert wird.

Zur Lösung der Aufgabe weist die Erfindung die Merkmale des Patentanspruchs 1 auf.

Erfindungsgemäß ist eine genaue Positionierung der Abschlussscheibe relativ zum Gehäuse und damit den Befestigungspunkten möglich. Die Toleranzen zwischen den sichtbaren Abschlussscheibenflächen und den Befestigungspunkten des Gehäuses können sehr klein sein. Dadurch erübrigt sich die aufwendige Ausrichtung des Scheinwerfers zum Ausgleich etwaiger Toleranzen. Hierbei muss das den Scheinwerfer aufnehmende Fahrzeugteil präzise gefertigt sein. Erfindungsgemäß kann ein erster Fixierungspunkt zwei Steckelemente zur Fixierung der Abschlussscheibe in alle Richtungen quer zur Steckrichtung und ein zweiter Fixierungspunkt zwei Steckelemente quer zur Steckrichtung ausschließlich zur vertikalen Fixierung der Abschlussscheibe aufweisen, wobei die Steckelemente der Fixierungsvorrichtungen in und entgegen der Steckrichtung gerichtete Anschlagflächen aufweisen, die das Aufsetzen der Abschlussscheibe in Steckrichtung begrenzen. Dadurch ist die Abschlussscheibe spannungsfrei in alle Richtungen quer zur Steckrichtung und auch in Steckrichtung fixiert. Hierbei ist es weiterhin vorteilhaft, wenn ein zweites Steckelement des zweiten Fixierungspunktes ein Aufnahmeloch und ein erstes Steckelement ein Zapfen aufweist, der in alle Richtungen quer zur Steckrichtung in dem Aufnahmeloch fixiert ist, und ein zweites Steckelement des zweiten Fixierungspunkts ein längliches Aufnahmeloch und ein erstes Steckelement ein Zapfen ist, der quer zur Längsausdehnung des Aufnahmeloches in dem Aufnahmeloch fixiert ist. Dadurch sind für die Herstellung der Steckelemente der Fixierungspunkte keine zusätzlichen verstellbare Werkzeugteile notwendig.

In diesem Zusammenhang ist es weiterhin vorteilhaft, wenn die Zapfen des ersten und zweiten Fixierungspunktes an ihrer Mantelfläche eine entgegen der Steckrichtung gerichtete und von den Anschlagflächen gebildete Anschlagschulter aufweisen, an der die Aufnahmeöffnung mit einem Randabschnitt anliegt. Dadurch ist die Abschlussscheibe auf einfache Art und Weise auch in und entgegen der Steckrichtung fixiert.

Ein Minimierung der Toleranzen zwischen der Abschlussscheibe und der Befestigungsvorrichtung des Gehäuse ist möglich, wenn ein Steckelement der Fixierungsvorrichtungen an jeweils einem Befestigungselement der Befestigungseinrichtung angeordnet ist.

Bei einer besonders vorteilhaften Weiterbildung der Erfindung ist das zweite Steckelement der Fixierungspunkte an den äußeren Rand der Abschlussscheibe angeformt und trägt ein Rastelement einer zwischen der Abschlussscheibe und dem Gehäuse bestehenden Rastvorrichtung, wobei das an die Abschlussscheibe angeformte Rastelement eine federnde Rastzunge ist, die in eine Rastöffnung des Gehäuses eingreift. Die Rastvorrichtung dient zur Lagesicherung der fixierten Abschlussscheibe. Die Fixierungspunkte sind an der Seite des Scheinwerfers angebracht, die genau zum Fahrzeug ausgerichtet sein muss. Dies kann die untere Seite des Scheinwerfers sein, da dieser Bereich gut am Fahrzeug zu sehen ist. Am oberen Scheinwerferrand können Rastlaschen die Abschlussscheibe am Gehäuse halten. Die Streuscheibe selbst kann zusätzlich durch Konstruktionskleber mit dem Gehäuse verbunden und abgedichtet werden.

Ein weiterer besonderer Vorteil ist, wenn die Befestigungspunkte der Befestigungseinrichtung des Gehäuses, denen jeweils ein Fixierungspunkt zugeordnet ist, von Steckverbindungen gebildet ist, die zusammen das Gehäuse vertikal und quer zu der Steckrichtung horizontal haltern. Da es sich sowohl bei der Fixierungsvorrichtung der Abschlussscheibe als auch bei der Befestigungsvorrichtung für das Gehäuse um Steckverbindungen handelt, können sehr kleine Toleranzen zwischen der Abschlussscheibe und den Befestigungspunkten des Gehäuses eingehalten werden. Dadurch ist nach einem Einstecken des Scheinwerfers in ein Fahrzeugteil sicher, dass zwischen dem äußeren Rand der Abschlussscheibe und dem benachbarten Rand einer Fahrzeugöffnung zumindest abschnittsweise ein gleichbreiter Spalt besteht.

Ein Ausführungsbeispiel der Erfindung wird nachfolgend anhand einer Zeichnung beschrieben.
Es zeigen:

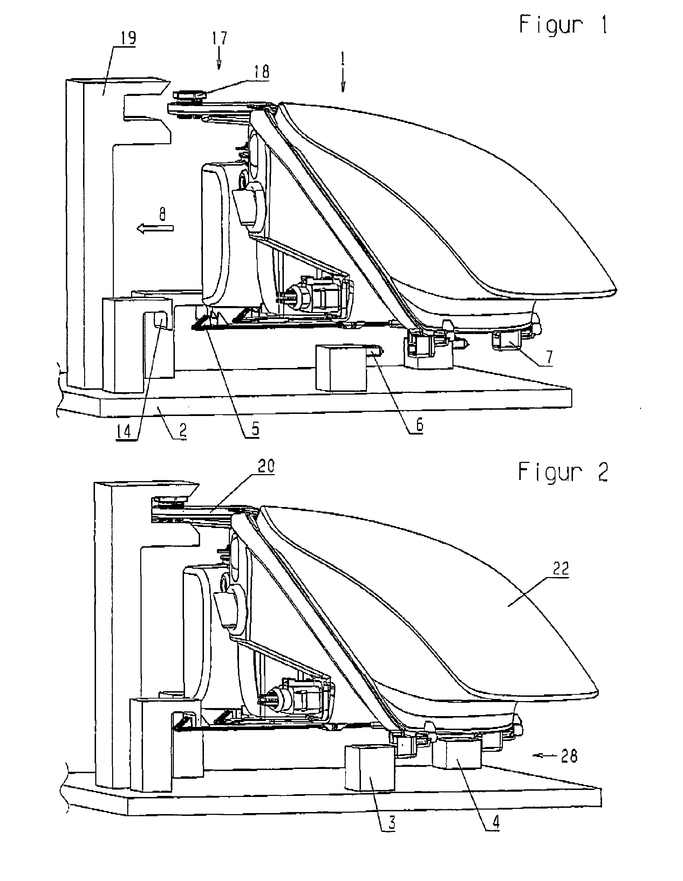

Figur 1 in einer perspektivischen Ansicht ein Befestigungssystem für einen Scheinwerfer vor dem Einschieben in ein Trägerteil eines Fahrzeugs,
Figur 2 in einer perspektivischen Ansicht den Scheinwerfer nach Figur 1 in einer genau zu dem Trägerteil ausgerichteten und fest mit dem Trägerteil verbundenen Endstellung,

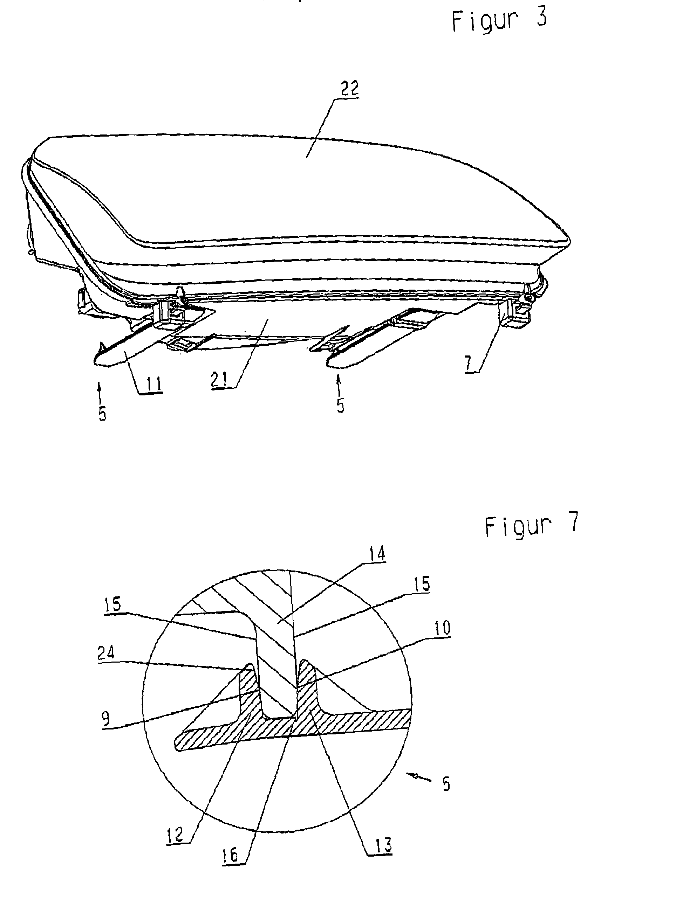

Figur 3 in einer perspektivischen Ansicht den Scheinwerfer von vorne,

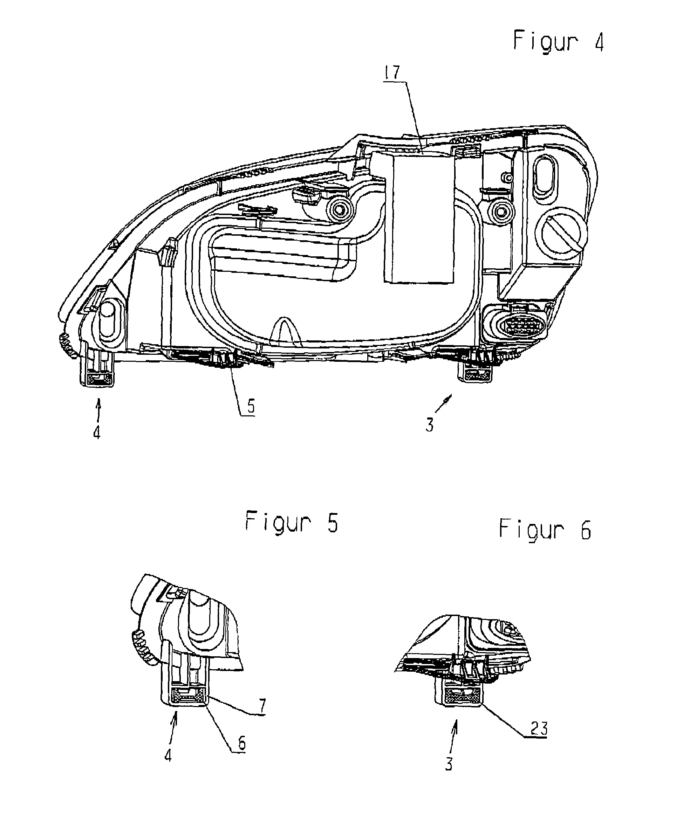

Figur 4 in einer Rückansicht den Scheinwerfer,
Figur 5 und 6 in einer vergrößert dargestellten Ansicht jeweils eine Einzelheit nach Figur 4 einer ersten bzw. zweiten Steckverbindung, die zwischen dem Scheinwerfer und dem Trägerteil bestehen,
Figur 7 in einer Ansicht eine Einzelheit nach Figur 2 einer von zwei Schnappverbindungen,

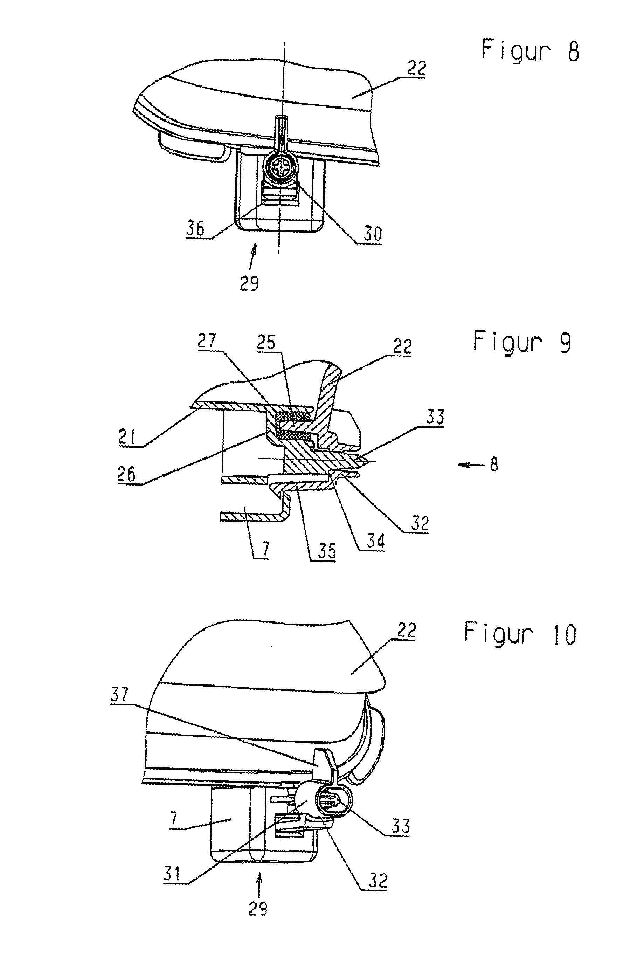

Figur 8 in einer Vorderansicht eine Einzelheit nach Figur 3 eines Fixierungspunktes einer Fixierungsvorrichtung für eine Abschlussscheibe des Scheinwerfers,
Figur 9 in einem mittleren Längsschnitt den Fixierungspunkt nach Figur 8 und
Figur 10 in einer perspektivischen Ansicht eine Einzelheit nach Figur 3 eines weiteren Fixierungspunktes der Fixierungsvorrichtung.

Ein Scheinwerfer 1 für Fahrzeuge weist ein aus Kunststoff bestehendes topfförmiges Gehäuse 21 und eine die vordere Seite des Gehäuses 21 abschließende Abschlussscheibe 22 auf. Der Scheinwerfer 1 ist mittels einer ersten und zweiten Steckverbindung 3 und 4, zweier Schnappverbindungen 5 und einer Befestigungsvorrichtung 17 an einem Trägerteil 2 eines Fahrzeugs festsetzbar. Der Scheinwerfer 1 ist mit seiner Abschlussscheibe 22 in einer Fahrzeugöffnung (nicht dargestellt) angeordnet, zwischen deren Rand und der Abschlussscheibe 22 ein umlaufender Spalt und keine den Scheinwerfer halternde Funktion besteht. Nach einem Endriegeln der Schnappverbindungen 5 ist der Scheinwerfer 1 leicht und schnell aus der Fahrzeugöffnung herausziehbar.

Zwei Steckverbindungen 3 und 4 sind auf der unteren Seite des Gehäuses 21 angeordnet und bestehen aus einem ersten und zweiten Steckteil 6 und 7. Als erstes Steckteil 6 dient ein Zapfen, der nach seinem Querschnitt ein freistehender Doppel T-Träger ist. Der mittlere Abschnitt des Doppel T-Trägers verläuft horizontal und die vertikalen Abschnitte 23 liegen mit ihren oberen und unteren Längsseiten an den Innenseiten einer als zweites Steckteil 7 dienenden Tasche an, die einen rechteckförmigen Querschnitt aufweist. Bei der ersten Steckverbindung 3 liegen die Abschnitte 23 des ersten Steckteils 6 mit ihren sich abgewandten breiten Außenflächen an den inneren vertikalen Schmalseiten des zweiten Steckteils 7 an, während bei der zweiten Steckverbindung 4 die Abschnitte 23 von den inneren Schmalseiten der taschenförmigen zweiten Steckteile 7 beabstandet sind. Dadurch ist der Scheinwerfer 1 an der ersten Steckverbindung 3 quer zur Steckrichtung 8 horizontal als auch vertikal gehaltert. An der zweiten Steckverbindung 4 ist der Scheinwerfer 1 vertikal gehaltert und quer zur Steckrichtung 8 horizontal verschiebbar. Die zweiten taschenförmigen Steckteile 7 sind an den unteren vorderen Randbereich des Gehäuses 21 angeformt. Die Anlageflächen zwischen dem ersten und zweiten Steckteil 6 und 7 sind in Steckrichtung 8 mindestens zweimal so lang ausgeführt wie die zapfenförmigen Steckteile 6 hoch sind.

Zwei Schnappverbindungen 5, welche jeweils einer der Steckverbindungen 3 bzw. 4 zugeordnet sind, sind zwischen den beiden Steckverbindungen 3 und 4 angeordnet. Die Schnappverbindungen 5 weisen jeweils einen an der unteren Seite des Gehäuses 21 angebrachten Rastarm 11 auf, der in Steckrichtung 8 weist und sich über die Rückseite des Scheinwerfers 1 hinaus erstreckt. Der Rastarm 11 ist eine flache, blattförmige Feder, deren breite Seitenflächen nach oben und unten gerichtet sind und die an der unteren Seite des Gehäuses 21 befestigt ist. Der Rastarm 11 weist an seinem freien Endabschnitt eine nach oben gerichtete Rastnase 12 auf, die einen nach unten gerichteten Rastvorsprung 14 des Trägerteils 2 selbsttätig hintergreift. Dabei liegt der Rastarm 11 mit einer vertikalen Federkraft an der Stirnfläche des Rastvorsprungs 14 an. Auf der der Rastnase 12 abgewandten Seite des Rastvorsprungs 14 ist an den Rastarm 11 ein Anschlagelement 13 angeformt. Die Rastnase 12 und das Anschlagelement 13 weisen an ihren sich zugewandten Anlageflächen 9 und 10 jeweils eine schräg verlaufende Einfädelfläche 24 auf, durch die die zwischen den Anlageflächen 9 und10 bestehende Aufnahme für den Rastvorsprung 14 sich zum Rastvorsprung 14 hin verbreitert. Der Rastvorsprung 14 liegt mit seiner Stirnfläche an dem Grund der Aufnahme an, in den eine quer zur Steckrichtung verlaufende Rinne 16 eingebracht ist. In die Rinne 16 greift ein Entformungsgrat des Rastvorsprungs 14 ein. Die Rastnase 12 liegt an der ihr zugewandten Seite 15 des Rastvorsprungs 14 federnd an und drückt den Rastvorsprung 14 mit der anderen Seite 15 gegen das Anschlagelement 13. Durch den quer zur Steckrichtung 8 federnden Rastarm 11 ist sicher, dass der Rastvorsprung 14 zwischen die Rastnase 12 und dem Rastvorsprung 14 eingreift und in und entgegen der Steckrichtung 8 spielfrei an dem Rastarm 11 gehalten ist. Somit ist außer dem Anschlagelement 13 des Rastarms 11 weder ein weiteres Anschlagelement noch ein zusätzliches federndes Element in Steckrichtung 8 den Steckverbindungen 3 und 4 zugeordnet.

Der Scheinwerfer 1 weist oberhalb seines Gehäuses 21 eine Befestigungsvorrichtung 17 auf, die aus einer an das Gehäuse 21 angeformten Lasche 20 und einem Justageelement 18 besteht. Die Lasche 20 weist in Einsteckrichtung 8 und trägt am freien Endabschnitt das Justageelement 18. Das Justageelement 18 ist eine Hohlschraube, die selbsthemmend in eine Gewindeöffnung der Lasche 20 eingeschraubt ist und mit ihrer Mittelachse vertikal verläuft. Das Justageelement 18 ist in ein gabelförmiges Aufnahmeteil 19 des Trägerteils 2 eingeschoben. Dabei liegt die Hohlschraube des Justageelements 18 mit ihrer oberen und unteren Stirnfläche an den sich zugewandten Seiten der gabelförmigen Aufnahmeteils 19 an und ist somit zwischen den Zinken der Gabel spielfrei gehalten. Die Lage der Lasche 20 kann auch durch eine Befestigungsschraube (nicht dargestellt), die durch die Hohlschraube des Justageelements 18 hindurchführt, an dem Fahrzeug gesichert sein. Statt ein Justageelement 18 zu verwenden kann die Lasche 20 vertikal federnd ausgeführt sein und eine Befestigungsschraube durch ein in Steckrichtung verlaufendes Langloch der Lasche 20 hindurchführen (nicht dargestellt).

Die Abschlussscheibe 22 ist aus Kunststoff hergestellt und weist an ihrem äußeren Rand einen Fuß 25 auf, der in ein umlaufendes U-förmiges Aufnahmebett 26 des Gehäuses 21 eintaucht. In das Aufnahmebett 26 ist eine den Fuß 25 umgebende Dichtungsmasse 27 eingebracht. Der Fuß 25 ist nach allen Seiten zu den Innenflächen des Aufnahmebetts 26 beabstandet, damit eine sichere Abdichtung zwischen der Abschlussscheibe 22 und dem Gehäuse 21 besteht. Um eine möglichst genaue Ausrichtung der Abschussscheibe 22 zu den Steckverbindungen 3 und 4 der Befestigungseinrichtung 28 zu erreichen, besteht zwischen der Abschussscheibe 22 und dem Gehäuse 21 eine Fixierungsvorrichtung 29. Die Fixierungsvorrichtung 29 weist einen ersten und zweiten Fixierungspunkt 30 bzw. 31 auf, die an jeweils einem Befestigungspunkt bzw. einer Steckverbindung 3 bzw. 4 der Befestigungseinrichtung 28 des Gehäuses 21 angeordnet ist. Die Fixierungspunkte 30 und 31 sind jeweils von einem ersten und zweiten Steckelement 33 und 32 gebildet. Als erstes Steckelement 33 dient ein Zapfen, der entgegen der Steckrichtung 8 weist, benachbart zum Fuß 25 der Abschlussscheibe 22 angeordnet ist, an das zweite Steckteil 7 der Steckverbindungen 3 und 4 angeformt ist, der sich zu seinem freien Ende hin verjüngt und im Querschnitt X- bzw. kreuzförmig ausgeführt ist. Als zweites Steckelement 32 der Fixierungspunkte 30 und 31 dient ein Aufnahmeloch, das von einer an den äußeren unteren Rand der Abschlussscheibe 22 angeformten Hülse gebildet ist und bei dem ersten Fixierungspunkt 30 kreisrund und bei dem zweiten Fixierungspunkt 31 ein horizontal verlaufendes Langloch ist. Der Zapfen greift in das kreisrunde Aufnahmeloch quer zur Steckrichtung 8 in alle Richtungen und in das längliche Aufnahmeloch ausschließlich vertikal spielfrei ein. Der Zapfen und das Aufnahmeloch liegen mit in bzw. entgegen der Steckrichtung 8 gerichteten Anschlagflächen 34 aneinander. Die Anschlagfläche 34 des Zapfens ist von einer Schulter an seiner Mantelfläche und des Aufnahmeloches von ihrem Rand gebildet. An das hülsenförmige zweite Steckteil 32 ist zur Abschlussscheibe 22 hin eine mit der Vorderseite der Abschlussscheibe 22 verbundene Versteifungsrippe 37 und auf anderen Seite hin ein Rastelement 35 angeformt. Das Rastelement 35 ist eine in Steckrichtung weisende federnde Rastzunge, die mit einer Rastnase in eine in das zweite Steckteil 7 eingebrachte Rastöffnung 36 eingreift. In dem oberen Bereich der Abschlussscheibe 22 ist diese durch nicht dargestellte weitere Rastelemente an dem Gehäuse 21 gehalten.

Durch den ersten Fixierungspunkt 30 ist die Abschlussscheibe 22 quer zur Steckrichtung 8 in alle Richtungen fixiert, während der zweite Fixierungspunkt 31 die Abschussscheibe 22 quer zur Steckrichtung 8 nur vertikal fixiert. Dadurch entstehen zwischen den Fixierungspunkten 30 und 31 in der Abschlussscheibe 22 keine Verspannungskräfte.

### Bezugszeichenliste:

- 1.: Scheinwerfer
- 2.: Trägerteil
- 3.: erste Steckverbindung
- 4.: zweite Steckverbindung
- 5.: Schnappverbindung
- 6.: erstes Steckteil
- 7.: zweites Steckteil
- 8.: Steckrichtung
- 9.: Anlagefläche
- 10.: Anlagefläche
- 11.: Rastarm
- 12.: Rastnase
- 13.: Anschlagelement
- 14.: Rastvorsprung
- 15.: Seiten
- 16.: Rinne
- 17.: Befestigungsvorrichtung
- 18.: Justageelement
- 19.: Aufnahmeteil
- 20.: Lasche
- 21.: Gehäuse
- 22.: Abschlussscheibe
- 23.: Abschnitte
- 24.: Einfädelfläche
- 25.: Fuß
- 26.: Aufnahmebett
- 27.: Dichtungsmasse
- 28.: Befestigungseinrichtung
- 29.: Fixierungsvorrichtung
- 30.: erster Fixierungspunkt
- 31.: zweiter Fixierungspunkt
- 32.: zweites Steckelement
- 33.: erstes Steckelement
- 34.: Anschlagflächen
- 35.: Rastelement
- 36.: Rastöffnung
- 37.: Versteifungsrippe

## Patentansprüche

1. Scheinwerfer für Fahrzeuge mit einem Gehäuse (21), mit einer die vordere Öffnung des Gehäuses (21) abschließenden Abschlussscheibe (22), mit einer Fixierungsvorrichtung (29), die die Abschlussscheibe (22) gegenüber dem Gehäuse (21) fixiert, mit einer Befestigungseinrichtung (28), welche mehrere Befestigungspunkte am Gehäuse (21) aufweist, durch die das Gehäuse (21) am Fahrzeug festsetzbar ist, wobei die Fixierungsvorrichtung (29) mindestens zwei Fixierungspunkte (30, 31) mit Steckelementen (32, 33) aufweist, die in Montagerichtung der Abschlussscheibe (22) steckbar sind, **dadurch gekennzeichnet, dass** mindestens ein erster Fixierungspunkt (30) zwei Steckelemente (32, 33) zur Fixierung der Abschlussscheibe (22) in alle Richtungen quer zur Steckrichtung (8) und mindestens ein zweiter Fixierungspunkt (31) zwei Steckelemente (32, 33) ausschließlich zur vertikalen Fixierung der Abschlussscheibe (22) aufweist, dass die Fixierungspunkte (30, 31) jeweils benachbart zu den durch eine Steckverbindung (3, 4) mit einem ersten Steckteil (6) und mit einem zweiten Steckteil (7) gebildeten Befestigungspunkten angeordnet sind, wobei ein erstes Steckelement (33) der Fixierungsvorrichtung (29) an das zweite Steckteil (7) der Steckverbindung (3, 4) angeformt ist.

2. Scheinwerfer nach nach Anspruch 1, **dadurch gekennzeichnet, dass** die Steckelemente (32 und 33) der Fixierungsvorrichtungen (29) in und entgegen der Steckrichtung (8) gerichtete Anschlagflächen (34) aufweisen, die das Aufsetzen der Abschlussscheibe (22) in Steckrichtung (8) begrenzen.

3. Scheinwerfer nach Anspruch 1 oder 2, **dadurch gekennzeichnet, dass** ein zweites Steckelement (32) des ersten Fixierungspunktes (30) ein Aufnahmeloch und ein erstes Steckelement (33) einen Zapfen aufweist, der in alle Richtungen quer zur Steckrichtung (8) in dem Aufnahmeloch fixiert ist.

4. Scheinwerfer nach einem der Ansprüche 1 bis 3, **dadurch gekennzeichnet, dass** ein zweites Steckelement (32) des zweiten Fixierungspunktes (31) ein längliches Aufnahmeloch und ein erstes Steckelement (33) ein Zapfen ist, der quer zur Längsausdehnung des Aufnahmeloches in dem Aufnahmeloch fixiert ist.

5. Scheinwerfer nach einem der Ansprüche 1 bis 4, **dadurch gekennzeichnet, dass** die Zapfen des ersten und zweiten Fixierungspunktes (30 und 31) an ihrer Mantelfläche einen entgegen der Steckrichtung (8) gerichtete und von den Anschlagflächen (34) gebildete Anschlagschulter aufweisen, an der die Aufnahmeöffnung des zweiten Steckelements (32) mit einem Randabschnitt anliegt.

6. Scheinwerfer nach einem der Ansprüche 1 bis 5, **dadurch gekennzeichnet, dass** ein Steckelement (32 bzw. 33) der Fixierungspunkte (30 und 31) jeweils an einem Befestigungselement der Befestigungseinrichtung (28) angeordnet ist.

7. Scheinwerfer nach einem der Ansprüche 1 bis 6, **dadurch gekennzeichnet, dass** das zweite Steckelement (32) der Fixierungspunkte (30 und 31) an den äußeren Rand der Abschlussscheibe (22) angeformt ist und ein Rastelement (35) einer zwischen der Abschlussscheibe (22) und dem Gehäuse (21) bestehenden Rastvorrichtung (36) trägt.

8. Scheinwerfer nach Anspruch 7, **dadurch gekennzeichnet, dass** das an die Abschlussscheibe (22) angeformte Rastelement (35) eine federnde Rastzunge ist, die in eine Rastöffnung (36) des Gehäuses eingreift.

9. Scheinwerfer nach einem der Ansprüche 1 bis 8, **dadurch gekennzeichnet, dass** die Befestigungspunkte der Befestigungseinrichtung (28) des Gehäuses (21), denen jeweils ein Fixierungspunkt (30 bzw. 31) zugeordnet ist, von Steckverbindungen (3 und 4) gebildet sind, die zusammen das Gehäuse (21) vertikal und quer zu der Steckrichtung (8) horizontal haltern.

## Claims

1. Headlamp for vehicles comprising a housing (21), a cover lens (22) covering the front opening of the housing (21), an anchoring device (29) holding the cover lens (22) in place on the housing (21), a fixing device (28) which has several fixing points on the housing (21) suited to firmly attaching the housing (21) to the vehicle, wherein the anchoring device (29) has at least two anchoring points (30, 31) with plug elements (32, 33) pluggable in mounting direction of the cover lens (22), **characterized in that** at least two anchoring points (30, 31) are provided such that a first anchoring point (30) has two plug elements (32, 33) for anchoring the cover lens (22) in all directions horizontally across the plug-in direction (8) and a second anchoring point (31) has two plug elements (32, 33) for exclusively anchoring the cover lens (22) in vertical direction, also **characterized by** each of the anchoring points (30, 31) being adjacent to the anchoring points provided by the plug connection (3, 4) to a first plug component (6) and a second plug component (7), wherein a first plug element (33) of the anchoring device (29) is molded to the second plug component (7) of the plug connection (3, 4).

2. Headlamp of claim 1, **characterized in that** the plug elements (32 and 33) of the anchoring devices (29) have abutments (34) in and opposing the plugging direction (8) such that the abutments (34) limit the depth by which the cover lens (22) can plug in in the plugging direction (8).

3. Headlamp of claims 1 or 2, **characterized in that** a second plug element (32) of the first anchoring point (30) has a socket hole and a first plug element (33) has a tenon plug which is anchored in the socket hole cutting across the plugging direction (8) in all directions.

4. Headlamp of claims 1 to 3, **characterized in that** a second plug element (32) of the second anchoring point (31) has an oblong socket hole and a first plug element (33) is a tenon plug which is anchored in the socket hole cutting across the long side of the socket hole.

5. Headlamp of claims 1 to 4, **characterized in that** the surface of the tenon plugs of the first and second anchoring point (30 and 31) are shaped like a shoulder made up of the abutments (34) and facing against the plugging direction (8) such that an edge of the socket opening of the second plug element (32) comes to rest on that shoulder.

6. Headlamp of claims 1 to 5, **characterized in that** each of the plug elements (32 or 33) of the anchoring points (30 and 31) is attached to one of the fixings of the fixing device (28).

7. Headlamp of claims 1 to 6, **characterized in that** the second plug element (32) of the anchoring points (30 and 31) is molded to the outer edge of the cover lens (22) and holds a locating element (35) of a locating implement (36) placed between the cover lens (22) and the housing (21).

8. Headlamp of claim 7, **characterized in that** the locating element (35) molded to the cover lens (22) is a resilient locating blade snapping into an opening (36) of the housing.

9. Headlamp of claims 1 to 8, **characterized in that** the attachment points of the fixing device (28) on the housing (21) and the anchoring points (30 or 31) allocated to them consist of plug connections (3 and 4) which work together to hold the housing (21) in a horizontal direction, cutting vertically and horizontally across the plugging direction (8).

## Revendications

1. Projecteur pour véhicules avec un boîtier (21), avec une glace externe (22) fermant l'ouverture avant du boîtier (21), avec un dispositif de fixation (29) qui fixe la glace externe (22) contre le boîtier (21), avec un dispositif de fixation (28) qui présente plusieurs points de fixation sur le boîtier (21) par lesquels le boîtier (21) peut être fixé sur le véhicule, le dispositif de fixation (29) comportant au moins deux points de fixation (30, 31) avec des éléments enfichables (32; 33) pouvant être enfichés dans le sens de montage de la glace externe (22), **caractérisé en ce qu'**au moins un premier point de fixation (30) présente deux éléments enfichables (32, 33) pour la fixation de la glace externe (22) dans tous les sens en diagonale du sens d'enfichage (8) et qu'au moins un deuxième point de fixation (31) présente deux éléments enfichables (32, 33) servant exclusivement à la fixation verticale de la glace externe (22), que les points de fixation (30, 31) soient disposés respectivement dans le voisinage des points de fixation formés par un assemblage emboîté (3, 4) avec un premier élément enfichable (6) et avec un deuxième élément enfichable (7), un premier élément enfichable (33) du dispositif de fixation (29) étant adapté sur le deuxième élément enfichable (7) de l'assemblage emboîté (3, 4).

2. Projecteur selon la revendication 1, **caractérisé en ce que** les éléments enfichables (32 et 33) des dispositifs de fixation (29) présentent des surfaces butées (34) dirigées dans le sens et dans le sens contraire du sens d'enfichage (8), lesquelles limitent la pose de la glace externe (22) dans le sens d'enfichage (8).

3. Projecteur selon la revendication 1 ou 2, **caractérisé en ce qu'**un deuxième élément enfichable (32) du premier point de fixation (30) présente un orifice de logement et un premier élément enfichable (33) un tenon, lequel est fixé dans toutes les directions en diagonale du sens d'enfichage (8) dans l'orifice du logement.

4. Projecteur selon l'une des revendications 1 à 3, **caractérisé en ce qu'**un deuxième élément enfichable (32) du deuxième point de fixation (31) est un orifice de logement oblong et qu'un premier élément enfichable (33) est un tenon, lequel est fixé en diagonale de la dilatation longitudinale de l'orifice de logement dans l'orifice de logement.

5. Projecteur selon l'une des revendications 1 à 4, **caractérisé en ce que** les tenons du premier et du deuxième points de fixation (30 et 31) présentent sur leur gaine un épaulement butée dirigé dans le sens contraire du sens d'enfichage (8) et formé par les surfaces butées (34), épaulement contre lequel s'appuie une section du bord de l'orifice de logement du deuxième élément enfichable (32).

6. Projecteur selon l'une des revendications 1 à 5, **caractérisé en ce qu'**un élément enfichable (32 ou 33) des points de fixation (30 et 31) est respectivement disposé sur un élément de fixation du dispositif de fixation (28).

7. Projecteur selon l'une des revendications 1 à 6, **caractérisé en ce que** le deuxième élément enfichable (32) des points de fixation (30 et 31) est adapté au bord extérieur de la glace externe (22) et qu'un élément cranté (35) porte un dispositif cranté (36) existant entre la glace externe (22) et le boîtier (21).

8. Projecteur selon la revendication 7, **caractérisé en ce que** l'élément cranté (35) adapté à la glace externe (22) est une languette crantée à ressort qui entre en prise dans une ouverture crantée (36) du boîtier.

9. Projecteur selon l'une des revendications 1 à 8, **caractérisé en ce que** les points de fixation du dispositif de fixation (28) du boîtier (21) auxquels un point de fixation (30 ou 31) est respectivement affecté sont formés par les assemblages emboîtés (3 et 4) qui maintiennent ensemble le boîtier (21) à la verticale et à l'horizontale en diagonale du sens d'enfichage (8).
